(19) Europäisches Patentamt

European Patent Office

Office européen des brevets

(11) **EP 0 503 519 B1**

(12) **EUROPÄISCHE PATENTSCHRIFT**

| | |
|---|---|
| (45) Veröffentlichungstag und Bekanntmachung des Hinweises auf die Patenterteilung:<br>**24.01.1996  Patentblatt 1996/04** | (51) Int Cl.6: **G11B 20/00**, G11B 27/10,<br>G11B 15/02, G11B 27/34 |

(21) Anmeldenummer: **92103952.5**

(22) Anmeldetag: **07.03.1992**

(54) **Videorecorder mit einem Speicher zur Abspeicherung des Inhaltsverzeichnisses einer Vielzahl von Magnetbandkassetten**

Videorecorder with memory to store the table of contents of a plurality of magnetic cassettes

Enregistreur vidéo avec registre de mémorisation de la table des matières d'une pluralité de cassettes magnétiques

(84) Benannte Vertragsstaaten:
**AT DE FR GB IT**

(30) Priorität: **11.03.1991  DE 4107734**

(43) Veröffentlichungstag der Anmeldung:
**16.09.1992  Patentblatt 1992/38**

(73) Patentinhaber:
**GRUNDIG E.M.V. Elektro-Mechanische Versuchsanstalt Max Grundig GmbH & Co. KG
D-90762 Fürth (DE)**

(72) Erfinder:
• **Boller, Peter, GRUNDIG E.M.V., Max Grundig
W-8510 Fuerth (DE)**

• **Präger, Gerhard, GRUNDIG E.M.V.,
Max Grundig
W-8510 Fuerth (DE)**

(74) Vertreter: **Eichstädt, Alfred
D-90748 Fürth (DE)**

(56) Entgegenhaltungen:
**EP-A- 0 257 534          EP-A- 0 363 653
GB-A- 2 227 622**

• **ELECTRONICS & WIRELESS WORLD Bd. 93, Nr.**
• **1608, Oktober 1986, SUTTON. SURREY. GB. Seiten 45 - 46; 'IBM'S PC FILING SYSTEM'**

**Beschreibung**

*VIDEORECORDER MIT EINEM SPEICHER ZUR ABSPEICHERUNG DES INHALTSVERZEICHNISSES EINER VIELZAHL VON MAGNETBANDKASSETTEN*

BESCHREIBUNG:

Die Erfindung betrifft einen Videorecorder mit den im Oberbegriff des Anspruchs 1 angegebenen Merkmalen.

Aus den europäischen Patentanmeldungen EP-A2-0257534 und EP-A2-0363653 sowie den nicht vorveröffentlichten deutschen Patentanmeldungen DE-A-3935294 und DE-A-3935292 der Anmelderin sind solche Videorecorder mit einem Archivspeicher bekannt. In diesem Archivspeicher sind für eine Vielzahl von numerierten Magnetbandkassetten Inhaltsverzeichnisse in Form von Informationen über die örtliche Lage der aufgezeichneten Programmbeiträge auf dem jeweiligen Band und deren Titel abgespeichert. Will der Benutzer einen bestimmten Programmbeitrag sehen, so legt er die Magnetbandkassette, auf der der gewünschte Programmbeitrag aufgezeichnet ist, in den Videorecorder ein. Dieser führt einen automatischen Initialisierungslauf durch. Bei diesem Initialisierungslauf aktiviert der Mikrocomputer des Videorecorders den Bandantriebsmotor zum kurzzeitigen Vor- und Zurückspulen des Bandes mit erhöhter Geschwindigkeit.

Während dieses Umspulvorganges werden von den Wellen der beiden Bandwickel oder von der Welle eines Bandwickels und der Capstan-Welle Impulse abgeleitet, deren Anzahl pro Zeiteinheit von der Drehgeschwindigkeit der zugehörigen Welle abhängt, und dem Mikrocomputer zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher ab. Der Benutzer ruft mittels der Bedientastatur das der eingelegten Magnetbandkassette zugehörige Inhaltsverzeichnis auf. Dieses wird auf dem Bildschirm eines an den Videorecorder angeschlossenen Fernsehempfängers in Tabellenform angezeigt. Der Benutzer wählt mittels der Bedientastatur den gewünschten Programmbeitrag an und betätigt eine Übernahmetaste. Der Mikrocomputer ruft aus dem Speicher den Bandstand des ausgewählten Programmbeitrages ab, vergleicht ihn mit dem momentanen Bandstand und steuert einen schnellen Umspulbetrieb zum Auffinden des gewünschten Programmbeitrages auf dem Band.

Aus GB-A-2 227 622 ist ein Videorecorder bekannt, der mittels eines Sperrcodes gesperrt und freigegeben werden kann.

Ausgehend von diesem Stand der Technik liegt der Erfindung die Aufgabe zugrunde, einen Videorecorder mit den im Oberbegriff des Anspruchs 1 angegebenen Merkmalen derart weiterzubilden, daß mit ihm ein unerwünschtes Abspielen bestimmter aufgezeichneter Programmbeiträge nicht möglich ist.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den abhängigen Patentansprüchen.

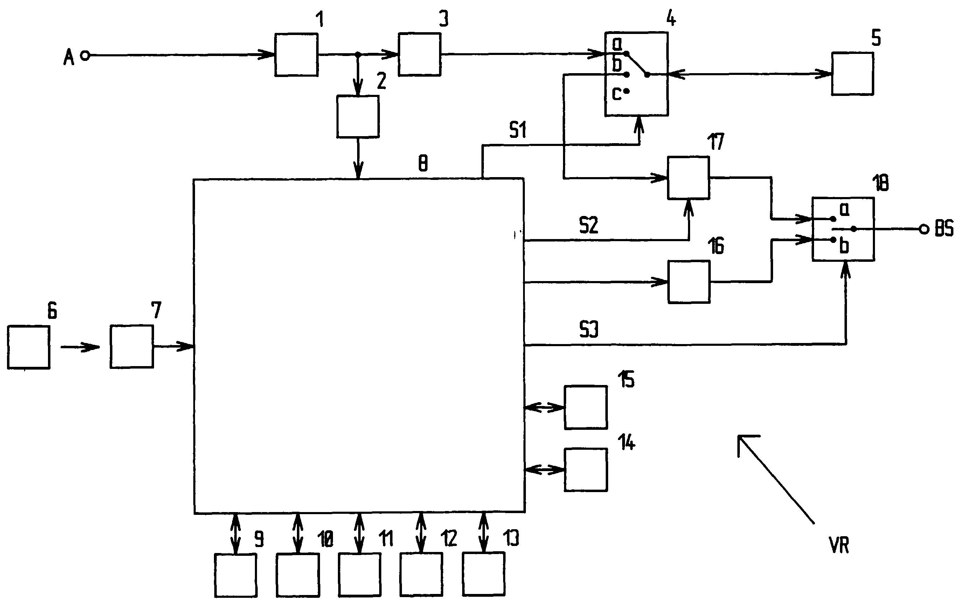

Die Vorteile der Erfindung bestehen beispielsweise darin, daß Eltern, die nicht möchten, daß sich ihre Kinder bestimmte Aufzeichnungen anschauen, auf einfache Weise eine Wiedergabe der genannten Aufzeichnungen verhindern können. Weitere Vorteile der Erfindung ergeben sich aus der Erläuterung eines Ausführungsbeispiels anhand der Figur.

Diese zeigt einen Videorecorder mit einem Antenneneingang A, einem Bildschirmausgang BS, einer Eingangsschaltung 1 mit einem Tuner und einer ZF-Stufe, einer Aufzeichnungssignalverarbeitungsschaltung 3, einem Aufzeichnungs-Wiedergabe-Umschalter 4, rotierenden Videoköpfen 5, einem Fernbedienungsgeber 6, einem Fernbedienempfänger 7, einem Mikrocomputer 8, einem Arbeitsspeicher 9, einem Programmierspeicher 10, einem Archivspeicher 11, einem ersten Impulsgeber 12, einem zweiten Impulsgeber 13, einem Bandzähler 14, einem Steuerspurkopf 15, einem Textbaustein 16, einer Wiedergabesignalverarbeitungsschaltung 17 und einem Schalter 18.

Die Aufzeichnung eines Programmbeitrages auf eine erste Videokassette geschieht wie folgt:
Nach dem erstmaligen Einlegen der Kassette in den Videorecorder VR übermittelt der Benutzer dem Mikrocomputer 8 des Videorecorders einmalig die Nummer der eingelegten Kassette unter Verwendung der alphanumerischen Tasten des Fernbedienungsgebers 6. Nach der Eingabe der Kassettennummer aktiviert der Mikrocomputer 8 den Bandantriebsmotor des Videorecorders zur Durchführung eines Initialisierungslaufes.

Bei diesem Initialisierungslauf wird das Band kurzzeitig mit erhöhter Geschwindigkeit vor- und zurückgespult. Während dieses Umspulvorganges werden von den Wellen der beiden Bandwickel oder von der Welle eines Bandwickels und der Capstan-Welle mittels der Impulsgeber 12 und 13 Impulse abgeleitet, deren Anzahl pro Zeiteinheit von der Drehgeschwindigkeit der zugehörigen Welle abhängt, und dem Mikrocomputer 8 zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher 9 ab.

Anschließend erfolgt die Zwischenspeicherung des Titels des aufzuzeichnenden Programmbeitrages. Dazu wird der Videorecorder nach dem sogenannten VPT-Verfahren (Videorecorderprogrammierung über Teletext) programmiert. Bei dieser Programmierung wird neben den für eine automatische Aufzeichnung des Programmbeitrages notwendigen Daten wie Aufzeichnungstag, Startzeit, Stopzeit und Sendekanal auch der Titel des Programmbeitrages aus dem Fernsehtextsignal abgetrennt. Hierzu wird das am Antenneneingang A anliegende Fernsehsignal über die Eingangsschaltung 1 dem Fernsehtextdecoder 2 zugeführt, an dessen Ausgang die dem Titel des Programmbeitrages entsprechenden Signale und die zur automatischen Aufzeichnung eines Programmbeitrages notwendigen Daten zur Verfügung gestellt werden. Die dem Titel des Programmbeitrages entsprechenden Signale werden im Arbeitsspeicher 9 und die zur automatischen Aufzeichnung des Programmbeitrages notwendigen Daten im Programmierspeicher 10 zwischengespeichert.

Nach dieser Zwischenspeicherung initiiert der Mikrocomputer 8 über den Textbaustein 16 und den Schalter 18, welcher vom Mikrocomputer 8 über die Steuerleitung S3 in die Schaltstellung b gebracht wurde, die Anzeige des Schriftzuges

"SPERRCODE? (JA = Ø / NEIN = 1)"

auf dem Bildschirm des an den Videorecorder VR angeschlossenen Fernsehempfängers. An dieser Stelle muß der Benutzer mittels des Fernbedienungsgebers 6 vorgeben, ob der aufzuzeichnende Programmbeitrag mit einem Sperrcode versehen werden soll oder nicht. Der eingegebene Wert wird ebenfalls im Arbeitsspeicher 9 zwischengespeichert.

Ist die Startzeit des aufzuzeichnenden Programmbeitrages erreicht, wird der Aufzeichnungsvorgang gestartet. Bei diesem Aufzeichnungsvorgang werden die aufzuzeichnenden Videosignale in der Eingangsschaltung 1 und der Aufzeichnungssignalverarbeitungsschaltung 3 in bekannter Weise verarbeitet und dann über den Aufzeichnungs-/Wiedergabe-Umschalter 4, welcher vom Mikrocomputer 8 über die Steuerleitung S1 in die Schaltstellung a gebracht wurde, den rotierenden Videoköpfen 5 zugeführt und mittels dieser in den Schrägspuren des Magnetbandes aufgezeichnet. Ferner werden während des Aufzeichnungsvorganges die mittels des Steuerspurmagnetkopfes 15 aufgezeichneten Steuerspurimpulse zur Aufzeichnung eines der Nummer der Kassette entsprechenden Signals impulsbreitenmoduliert aufgezeichnet. Während des Aufzeichnungsvorganges liefert der Bandzähler 14 ständig Informationen über den aktuellen Bandstand an den Mikrocomputer 8. Damit steht auch bei der Beendigung des Aufzeichnungsvorganges eine Bandstandsinformation zur Verfügung. Diese wird zusammen mit dem Bandstand des Anfangs, dem Titel der Sendung, der Sperrcodeinformation und gegebenenfalls der Nummer der eingelegten Kassette in einem von der Nummer der Kassette abhängigen Speicherbereich des Archivspeichers 11 abgelegt.

Auf ähnliche Weise erfolgt die Aufzeichnung weiterer Programmbeiträge auf dieselbe Kassette und die Aufzeichnung von Programmbeiträgen auf weitere numerierte Kassetten.

Durch die beschriebenen Aufzeichnungsvorgänge sind im Archivspeicher 11 der Titel, der Anfangs- und Endbandstand, die Sperrcode-Information und gegebenenfalls die Kasettennummer für jeden auf eine numerierte Kassette aufgezeichneten Programmbeitrag abgespeichert.

Alternativ dazu ist es auch möglich, nicht jedem einzelnen Programmbeitrag eine individuelle Sperrcode-Information zuzuordnen, sondern allen Programmbeiträgen auf einer bestimmten Kassette dieselbe Sperrcode-Information und damit der Kassette selbst eine Sperrcode-Information zuzuordnen.

Im folgenden wird anhand verschiedener Beispiele erläutert, wie der beanspruchte Videorecorder wiedergabeseitig funktioniert.

Nach einem ersten Ausführungsbeispiel soll ein auf einer fremdbespielten Magnetbandkassette aufgezeichneter Programmbeitrag wiedergegeben werden, wobei in der Steuerspur kein der Nummer der Kassette entsprechendes Signal aufgezeichnet ist. Nach dem Einlegen dieser Kassette in den Videorecorder VR aktiviert der Mikrocomputer 8 den Bandantriebsmotor zur Durchführung eines Initialisierungslaufes. Während dieses Initialisierungslaufes werden mittels des Steuerspurmagnetkopfes 15 die in der Steuerspur aufgezeichneten Steuerspurimpulse wiedergegeben und vom Mikrocomputer 8 ausgewertet. Dieser erkennt, daß der Kassette bisher keine Nummer zugeordnet ist und blockiert den Wiedergabevorgang. Dieses Blockieren kann durch ein Unterbrechen des Signalweges im Wiedergabezweig erfolgen, beispielsweise dadurch, daß der Mikrocomputer 8 über die Steuerleitung S1 den Aufzeichnungs-Wiedergabe-Umschalter 4 in die Schaltstellung c bringt, durch ein Deaktivieren der Wiedergabesignalverarbeitungsschaltung 17 über die Steuerleitung S2 oder durch ein Deaktivieren aller für die Wiedergabe einer Aufzeichnung notwendigen Baugruppen des Videorecorders. Bei diesem Ausführungsbeispiel wird folglich erreicht, daß eine Wiedergabe einer mittels eines fremden Videorecorders getätigten Aufzeichnung blockiert wird. Diese Blockade wird erst dann aufgehoben, wenn mittels des Fernbedienungsgebers 6 ein Freigabecode eingegeben wird.

Nach einem zweiten Ausführungsbeispiel soll ein auf einer der numerierten Kassetten aufgezeichneter Programmbeitrag wiedergegeben werden, wobei in der Steuerspur das der Nummer der Kassette entsprechende Signal aufgezeichnet ist. Nach dem Einlegen dieser Kassette in den Videorecorder VR aktiviert der Mikrocomputer 8 den Bandantriebsmotor zur Durchführung eines Initialisierungslaufes. Im Rahmen dieses Initialisierungslaufes wird - wie bereits oben beschrieben - unter Verwendung der von den Impulsgebern 12 und 13 gelieferten Impulse der Bandstand ermittelt.

Weiterhin werden mittels des Steuerspurmagnetkopfes 15 die in der Steuerspur aufgezeichneten Steuerspurimpulse wiedergegeben und vom Mikrocomputer 8 ausgewertet. Dieser erkennt die der eingelegten Kassette zugeordnete Nummer und überprüft anhand der im Archivspeicher 11 zu dieser Kassette abgespeicherten Informationen, ob einem auf dieser Kassette aufgezeichneten Programmbeitrag ein Sperrcode zugeordnet ist oder nicht. Ist das nicht der Fall, gibt der Mikrocomputer 8 die Wiedergabe frei. Ist jedoch einem auf der Kassette aufgezeichneten Programmbeitrag ein Sperrcode zugeordnet, dann überprüft der Mikrocomputer ständig, ob der vom Bandzähler 14 gelieferte momentane Bandstand im Bereich zwischen dem Anfangs- und dem Endbandstand eines Programmbeitrages liegt, welchem ein Sperrcode zugeordnet ist, oder nicht.

Liegt der vom Bandzähler 14 während der Wiedergabe gelieferte Zählerstand nicht im Bereich zwischen dem Anfangs- und Endbandstand eines Programmbeitrages, welchem ein Sperrcode zugeordnet ist, dann gibt der Mikrocomputer 8 die Wiedergabe frei, ansonsten blockiert er sie ebenso, wie es im Zusammenhang mit dem ersten Ausführungsbeispiel beschrieben wurde. Auch bei diesem Ausführungsbeispiel wird die Blockade der Wiedergabe vom Mikrocomputer 8 dann aufgehoben, wenn mittels des Fernbedienungsgebers 6 ein Freigabecode eingegeben wird.

Nach einem weiteren Ausführungsbeispiel für die Erfindung soll der Videorecorder VR zur Anzeige des im Archivspeicher 11 abgespeicherten Inhaltsverzeichnisses einer der numerierten Kassetten verwendet werden. Diese Anzeige wird durch die Betätigung einer Taste des Fernbedienungsgebers 6 eingeleitet. Danach initiiert der Mikrocomputer 8 über den Textbaustein 16 und den Schalter 18, welcher vom Mikrocomputer über die Steuerleitung 53 in die Schaltstellung b gebracht wurde, die Anzeige des Schriftzuges

"GEBEN SIE DIE NUMMER DER GEWÜNSCHTEN KASSETTE EIN" auf dem Bildschirm des an den Videorecorder angeschlossenen Fernsehempfängers.

Ist die Nummer der Kassette mittels der Zifferntasten des Fernbedienungsgebers 6 eingegeben, dann überprüft der Mikrocomputer, ob einem der auf dieser Kassette aufgezeichneten Programmbeiträge eine Sperrcodeinformation zugeordnet ist oder nicht. Ist das nicht der Fall, dann initiiert der Mikrocomputer 8 über den Textbaustein 16 und den Schalter 18, welcher vom Mikrocomputer über die Steuerleitung S3 in die Schaltstellung b gebracht wurde, die Anzeige des gewünschten Inhaltsverzeichnisses. Ist einem der auf der Kassette aufgezeichneten Programmbeiträge hingegen eine Sperrcodeinformation zugeordnet, dann initiiert der Mikrocomputer die Anzeige des Schriftzuges

"FREIGABECODE EINGEBEN" auf dem Bildschirm.

Wird der Freigabecode mittels der Bedientasten des Fernbedienungsgebers 6 eingegeben, dann wird das gewünschte Inhaltsverzeichnis auf dem Bildschirm aufgelistet. Wird der Freigabecode nicht eingegeben, dann unterbleibt die Auflistung des gewünschten Inhaltsverzeichnisses.

Bei einer Modifikation des vorstehend beschriebenen Ausführungsbeispiels erfolgt dann, wenn einem auf der Kassette aufgezeichneten Programmbeitrag eine Sperrcodeinformation zugeordnet ist, eine Anzeige des gewünschten Inhaltsverzeichnisss der Kassette, in welchem jedoch nur die Programmbeiträge der Kassette enthalten sind, denen keine Sperrcodeinformation zugeordnet ist. Die Anzeige des kompletten Inhaltsverzeichnisses ist auch hier durch Eingabe eines Freigabecodes mittels des Fernbedienungsgebers 6 möglich.

**Patentansprüche**

1. Videorecorder mit

   - einer Bedieneinheit,

   - einem Mikrocomputer und

   - einem Archivspeicher mit einem ersten Speicherbereich zur Abspeicherung von Bandstandsinformationen und Titel von Programmbeiträgen einer Vielzahl von numerierten Magnetbandkassetten,
   **dadurch gekennzeichnet**, daß

   - der Archivspeicher (11) einen zweiten Speicherbereich zur Abspeicherung einer Sperrcodeinformation aufweist, und daß der Videorecorder

   - Mittel (8) zur Sperrung der Wiedergabe von Programmbeiträgen, denen im zweiten Speicherbereich eine Sperrcodeinformation zugeordnet ist, enthält.

2. Videorecorder nach Anspruch 1,
   **dadurch gekennzeichnet**, daß die Sperrcodeinformation einer bestimmten Magnetbandkassette zugeordnet ist.

3. Videorecorder nach Anspruch 1,
   **dadurch gekennzeichnet**, daß die Sperrcodeinformation jedem einzelnen, auf einer bestimmten Kassette aufgezeichneten Programmbeitrag individuell zugeordnet ist.

4. Videorecorder nach einem der vorhergehenden Ansprüche,
   **dadurch gekennzeichnet**, daß der Mikrocomputer (8) die Wiedergabe eines Programmbeitrages, welchem ein Sperrcode zugeordnet ist, nur dann freigibt, wenn mittels der Bedieneinheit (6) ein Freigabecode eingegeben ist.

5. Videorecorder nach einem der vorhergehenden Ansprüche,
   **dadurch gekennzeichnet**, daß der Mikrocomputer (8) in Ansprache auf einen mittels der Bedieneinheit (6) eingegebenen Bedienbefehl die Anzeige einer Tabelle, in welcher die Bandstandsinformationen und Titel der auf einer gewünschten Magnetbandkässette aufgezeichneten Programmbeiträge aufgelistet sind, auf dem Bildschirm eines an den Videorecorder angeschlossenen Fernsehempfängers initiiert, wobei in dieser Tabelle die mit einem Sperrcode versehenen Programmbeiträge nicht erfasst sind.

6. Videorecorder nach einem der vorhergehenden Ansprüche,
**dadurch gekennzeichnet,** daß der Mikrocomputer (8) in Ansprache auf einen mittels der Bedieneinheit (6) eingegebenen Bedienbefehl die Anzeige einer Tabelle, in welcher die Bandstandsinformationen und Titel von Programmbeiträgen aufgelistet sind, auf dem Bildschirm eines an den Videorecorder angeschlossenen Fernsehempfängers initiiert, wobei in dieser Tabelle die Daten einer Magnetbandkassette, auf welcher mindestens ein Programmbeitrag aufgezeichnet ist, welchem ein Sperrcode zugeordnet ist, nicht erfasst sind.

7. Videorecorder nach Anspruch 5 oder 6,
**dadurch gekennzeichnet,** daß der Mikrocomputer die Auflistung von Programmbeiträgen, denen ein Sperrcode zugeordnet ist, nach Eingabe eines Freigabecodes freigibt.

8. Videorecorder nach einem der vorhergehenden Ansprüche,
**dadurch gekennzeichnet**, daß er einen Steuerspurmagnetkopf (15) aufweist, mittels dessen die Nummer einer Magnetbandkassette durch Impulsbreitenmodulation von Steuerspurimpulsen aufgezeichnet wird.

9. Videorecorder nach einem der vorhergehenden Ansprüche,
**dadurch gekennzeichnet,** daß der Mikrocomputer (8) die Wiedergabe eines auf einer nichtnumerierten Kassette aufgezeichneten Programmbeitrages nur dann freigibt, wenn mittels der Bedieneinheit (6) ein Freigabecode eingegeben ist.

10. Videorecorder nach einem der vorhergehenden Ansprüche,
**dadurch gekennzeichnet**, daß der Mikrocomputer (8) nach dem Einlegen einer Kassette in den Videorecorder automatisch einen Initialisierungslauf zur Ermittlung der momentanen Bandposition auslöst.

## Claims

1. Video recorder with

- an operating unit,
- a microcomputer and
- an archive memory with a first memory area for the storage of tape-position information and titles of programmes of a plurality of numbered magnetic tape cassettes,
characterised in that
- the archive memory (11) has a second memory area for the storage of a locking-code and in that
- the video recorder contains means (4) for blocking the playback of programmes to which a locking-code is assigned in the second memory area.

2. Video recorder according to Claim 1,
characterised in that the locking-code is assigned to a certain magnetic tape cassette.

3. Video recorder according to Claim 1,
characterised in that the locking-code is individually assigned to each individual programme recorded on a certain cassette.

4. Video recorder according to one of the preceding claims,
characterised in that the microcomputer (8) enables the playback of a programme to which a locking-code is assigned only when an enabling-code is entered by means of the operating unit (6).

5. Video recorder according to one of the preceding claims,
characterised in that in response to an operating command entered by means of the operating unit (6) the microcomputer (8) initiates the display of a table in which the tape-position information and titles of the programmes recorded on a desired magnetic tape cassette are listed on the screen of a television receiver connected to the video recorder, whereby those programmes provided with a locking-code are not included in said table.

6. Video recorder according to one of the preceding claims,
characterised in that in response to an operating command entered by means of the operating unit (6) the microcomputer (8) initiates the display of a table in which the tape-position information and titles of programmes are listed on the screen of a television receiver connected to the video recorder, whereby the data of a magnetic tape cassette on which at least one programme is recorded to which a locking-code is assigned are not included in said table.

7. Video recorder according to Claim 5 or 6,
characterised in that the microcomputer (8) enables the listing of programmes to which a locking-code is assigned after input of an enabling-code.

8. Video recorder according to one of the preceding claims,
characterised in that it has a control-track magnetic head (15) by means of which the number of a magnetic-tape cassette is recorded by pulsewidth modulation of control-track pulses.

9. Video recorder according to one of the preceding claims,
characterised in that the microcomputer (8) enables the playback of a programme recorded on an unnumbered cassette only when an enabling-code is entered by means of the operating unit (6).

10. Video recorder according to one of the preceding claims,
characterised in that after the insertion of a cassette into the video recorder the microcomputer (8) automatically triggers an initialisation sequence for determining the instantaneous tape-position.

**Revendications**

1. Enregistreur vidéo comportant

   - une unité de commande,
   - un micro-ordinateur, et
   - une mémoire d'archivage comportant une première zone de mémoire pour la mémorisation d'informations sur la position de la bande et de titres de parties de programme d'une multiplicité de cassettes à bande magnétique numérotées, caractérisé en ce que
   - la mémoire d'archivage (11) comporte une seconde zone de mémoire pour la mémorisation d'une information de code de blocage, et que l'enregistreur vidéo contient
   - des moyens (4) pour bloquer la reproduction de parties de programme, auxquelles une information de code de blocage est associée dans la seconde zone de mémoire.

2. Enregistreur vidéo selon la revendication 1, caractérisé en ce que l'information de code de mémoire est associée à une cassette à bande magnétique déterminée.

3. Enregistreur vidéo selon la revendication 1, caractérisé en ce que l'opération de code de blocage est associée individuellement à chaque partie individuelle de programme enregistrée dans une cassette déterminée.

4. Enregistreur vidéo selon l'une des revendications précédentes, caractérisé en ce que le micro-ordinateur (8) libère la reproduction d'une partie de programme, à laquelle est associé un code de blocage, uniquement lorsqu'un code de libération est introduit au moyen de l'unité de commande (6).

5. Enregistreur vidéo selon l'une des revendications précédentes, caractérisé en ce qu'en réponse à une instruction de commande introduite au moyen de l'unité de commande (6), le micro-ordinateur (8) déclenche l'affichage d'un tableau, dans lequel sont listées des informations concernant la position de la bande et les titres des parties de programme enregistrées sur une cassette à bande magnétique désirée, sur l'écran d'un récepteur de télévision raccordé à l'enregistreur vidéo, les parties de programme pourvues d'un code de blocage n'étant pas recensées dans ce tableau.

6. Enregistreur vidéo selon l'une des revendications précédentes, caractérisé en ce qu'en réponse à une instruction de commande introduite au moyen de l'unité de commande (6), le micro-ordinateur (8) déclenche l'affichage d'un tableau, dans lequel les informations concernant la position de la bande et les titres de parties de programme sont listées, sur l'écran d'un récepteur de télévision raccordé à l'enregistreur vidéo, les données d'une cassette à bande magnétique, sur laquelle est enregistrée au moins une partie de programme à laquelle est associé un code de blocage, n'étant pas recensées dans ce tableau.

7. Enregistreur vidéo selon la revendication 5 ou 6, caractérisé en ce qu'après l'introduction d'un code de libération, le micro-ordinateur libère la liste de parties de programme, auxquelles est associé un code de blocage.

8. Enregistreur vidéo selon l'une des revendications précédentes, caractérisé en ce qu'il comporte une tête magnétique à piste de commande (15), au moyen de laquelle le numéro d'une cassette à bande magnétique est enregistré au moyen d'une modulation de largeur des impulsions de pistes de commande.

9. Enregistreur vidéo selon l'une des revendications précédentes, caractérisé en ce que le micro-ordinateur (8) autorise la reproduction d'une partie de programme enregistrée dans une cassette non numérotée, uniquement lorsqu'un code de libération est introduit au moyen de l'unité de commande (6).

10. Enregistreur vidéo selon l'une des revendications précédentes, caractérisé en ce qu'après insertion d'une cassette dans l'enregistreur vidéo, le micro-ordinateur (8) déclenche automatiquement un déplacement d'initialisation pour déterminer la position instantanée de la bande.

EP 0 503 519 B1